Europäisches Patentamt

European Patent Office

Office européen des brevets

(11) Veröffentlichungsnummer: **0 209 792**
**B1**

(12) **EUROPÄISCHE PATENTSCHRIFT**

(45) Veröffentlichungstag der Patentschrift: 19.09.90

(21) Anmeldenummer: **86109337.5**

(22) Anmeldetag: **08.07.86**

(51) Int. Cl.⁵: **B 23 H 1/02,** B 23 H 7/16,
B 23 H 7/26

(54) **Verfahren zur gesteuerten Rückzugsbewegung einer Senkelektrode bei einer Elektroerosionsmaschine.**

(30) Priorität: **18.07.85 DE 3525683**

(43) Veröffentlichungstag der Anmeldung:
**28.01.87 Patentblatt 87/05**

(45) Bekanntmachung des Hinweises auf die
Patenterteilung:
**19.09.90 Patentblatt 90/38**

(84) Benannte Vertragsstaaten:
**CH DE FR GB IT LI LU SE**

(56) Entgegenhaltungen:
**DE-B-1 690 752**

(73) Patentinhaber: **AG für industrielle Elektronik
AGIE Losone bei Locarno
CH-6616 Losone/Locarno (CH)**

(72) Erfinder: **Pelloni, Norman
Via dei Lupi
CH-6596 Gordola (CH)**
Erfinder: **Prati, Antonio
Via San Jorio 20
CH-6600 Locarno (CH)**

(74) Vertreter: **EGLI-EUROPEAN PATENT
ATTORNEYS
Widenmayerstrasse 5
D-8000 München 22 (DE)**

**Beschreibung**

Die Erfindung bezieht sich auf ein Verfahren zur gesteuerten Rückzugsbewegung der Senkelektrode bei einer Elektroerosionsmaschine gemäß dem Oberbegriff des Patentanspruchs 1. Ein derartiges Verfahren ist aus der DE—OS—32 08 389 bekannt. Dort wird im Kurzschlußfalle zwischen Elektrode und Werkstück die Rückzugsrichtung so festgelegt, daß sie im wesentlichen in normaler Richtung zu den zu bearbeitenden Flächen am Werkstück verläuft. Beispielsweise verläuft die Rückzugsrichtung bei rotationssymmetrischen Innenkonturen im Werkstück dort in Richtung zum Symmetriezentrum hin.

Ein ähnliches Verfahren ist aus der DE—OS—31 35 934 bekannt. Beim sogenannten Planetär-Erodieren, bei dem der Elektrode eine zusätzliche Kreisbewegung (neben der eigentlichen Erodierbahn) überlagert ist, wird die Elektrode zum Mittelpunkt der Kreisbewegung hin zu bewegt, wenn der Bearbeitungsspalt zu gering ist.

Ein zu geringer Bearbeitungsspalt wird auch dort durch das Auftreten eines Kurzschlusses erkannt.

Die EP—A1—90049 beschreibt ein ähnliches Verfahren, bei dem die Senkelektrode im Falle eines Kurzschlusses zu einem vorher festgelegten Punkt zurückgezogen wird, wobei dieser Punkt unabhängig von der zuvor durchlaufenen Bahn der Elektrode ist und für bestimmte zu erodierende Formen von Ausnehmungen jeweils eindeutig festgelegt wird. Dieser definierte Punkt soll dabei möglichst der Mittelpunkt der erodierten Ausnehmung sein.

Bei einer Elektroerosionsmaschine der Anmelderin des Typs "AGIEMAT III" erfolgt bei Feststellen eines Kurzschlusses eine Rückzugsbewegung dergestalt, daß die Elektrode zunächst in Richtung zur Mitte der erodierten Öffnung, also in der Arbeitsebene bzw. XY-Ebene bewegt und dann von diesem Mittelpunkt aus senkrecht aus der Öffnung herausgezogen wird, also in Z-Richtung. Danach muß dann die Elektrode neu in die weiter zu erodierende Öffnung eingefahren werden. Dieser Arbeitsablauf ist zeitaufwendig und weist weiterhinb den Nachteil auf, daß in manchen Fällen der Kurzschluß nicht schnell genug beseitigt wird, während in anderen Fällen die Kurzschlußbeseitigungsmaßnahme zu aufwendig ist, d.h. in manchen Fällen ist die Rückzugsstrecke länger als es für eine Kurzschlußbeseitigung erforderlich ist. Schließlich ist diese Form der Rückzugsbewegung bei komplexeren Formen von erodierten Öffnungen nicht anwendbar, da es in manchen Fällen während der Rückzugsbewegung zu einer Kollison zwischen der Elektrode und der Wandung der erodierten Öffnung des Werkstückes kommen kann.

Auch bei den Verfahren gemäß DE—OS—31 35 934, 32 08 389 und EP—A1—90049 ist es nachteilig, daß bei jedem Kurzschluß sofort eine vollständige Rückzugsbewegung eingeleitet wird.

Aufgabe der Erfindung ist es daher, das Verfahren der eingangs genannten Art dahingehend zu verbessern, daß einerseits unnötig große Rückzugsbewegungen vermieden werden und andererseit Kurzschlüsse möglichst schnell beseitigt werden. Weiterhin soll der Bahnverlauf der Rückzugsbewegung möglichst flexibel der Geometrie der erodierten Öffnung angepaßt werden können.

Diese Aufgabe wird durch die im kennzeichnenden Teil des Patentanspruches 1 angegebenen Merkmale gelöst. Vorteilhafte Ausgestaltungen und Weiterbildungen der Erfindung sind den Unteransprüchen zu entnehmen.

Kurz zumammengefaßt fährt bei Auftreten eines Kurzschlusses die Senkelektrode zunächst entlang der bisher gefahrenen Bahn um eine vorgegebene Wegstrecke zurück. Diese Wegstrecke kann beliebig vorgegeben werden. In vielen Fällen wird damit bereits der Kurzschluß beseitigt, sa daß die Zustellbewegung wider eingeleitet werden kann. Am Ende dieser ersten Rückzugsbahn wird überprüft, ob der Kurzschluß beseitigt ist. Ist dies nicht der Fall, so wird die Elektrode auf einer vorgegebenen zweiten Bahn weiter von dem Kurzschlußpunkt fortbewegt. Diese zweite Bahn ist geradlinig und wird im folgenden daher auch Rückzugsvektor genannt. Ganz allgemein wird der Rückzugsvektor so gerichtet, daß sich die Elektrode möglichst schnell vom Kurzschlußpunkt entfernt. Sofern die Geometrie der erodierten Öffnung des Werkstücks dies zuläßt, wird daher die Elektrode schräg nach oben heraus bewegt.

Für eine möglichst flexible Anpassung des Rückzugsweges an die Geometrie der erodierten Öffnung wird entweder laufend oder bei Auftreten eines Kurzschlusses der Rückzugsvektor ermittelt. Der Rückzugsvektor kann auf verschiedene Weise definiert werden. Zum einen kann er in Ausdrücken der Hauptachsen (X, Y, Z) der Maschine definiert werden, also in einem maschinen-orientierten Koordinatensystem. Bei den zunehmend komplexer werdenden Bewegungsbahnen beim Senkerodieren wäre dann die Lage des Rückzugsvektors nur sehr umständlich zu ermitteln und von einer Bedienperson der Maschine während des Erodierens kaum mehr zu verändern. Bevorzugt ist es daher, den Rückzugsvektor in einem benutzerorientierten Koordinaten system zu definieren, dessen Parameter leichter zu überschauen sind. Der Rückzugzvektor wird daher vorzugsweise wie folgt definiert:

Im Zwischenpunkt (Rückzugspunkt) wird eine Tangentialebene ermittelt, die also alle Tangenten an dem Zwischenpunkt beinhaltet. Weiterhin wird eine Normalebene im Zwischenpunkt ermittelt, die senkrecht auf der Tangentialebene und senkrecht auf einer Arbeitsebene steht. Die Arbeitsebene ihrerseits enthält die Tangente im Zwischenpunkt, die gleichzeitig die Tangente and die Erosionsbahn ist. Diese drei Ebenen (Arbeitsebene, Tangentialebene und Normalebene) stehen somit senkrecht zueinander und bilden ein von den Hauptachsen der Maschine unabhängiges Koordinatensystem (in manchen Fällen kann natürlich die Arbeitsebene mit der XY-Ebene der Maschine zusammenfallen). Falls die Erosionsbahn mit einer der Hauptachsen (X- oder Y-Achse der Maschine) zusammenfällt, so schliessen die Tangential- und die Normalebene in diesen Ausnahmefällen die Hauptachsen der Maschine ein.

Die Rückzugsebene, in der der Rückzugsvektor liegt, ist dann gegenüber den drei genannten Ebenen gekippt. Vorzugsweise steht diese Rückzugsebene senkrecht zur Tangentialebene, so daß sie um einen Winkel ($\beta$) gegenüber der Normalebene gekippt ist. Dieser Winkel ($\beta$) ist für eine Bedienperson sehr anschaulich, da er den Neigungswinkel des Rückzugsvektors in Bezug auf die Haupterosionsrichtung angibt. Weiterhin ist der Rückzugsvektor gegenüber der Tangentialebene um einen Winkel (90-$\alpha$) gekippt, was für eine Bedienperson ebenfalls sehr anschaulich ist, da dieser Winkel die Neigung des Rückzugsvektors gegenüber der Wandung der erodierten Ausnehmung bezeichnet.

Beide Winkel sind frei vorwählbar und auch während des Erodiervorganges veränderbar. Gleiches gilt für die Länge der Rückzugsvektors, so daß der Rückzugsvektor insgesamt vollständig flexibel den jeweiligen Erfordernissen angepaßt werden kann.

Mit dem Verfahren nach der Erfindung weden folgende Vorteile erreicht:
—Alle Parameter des gesamten "Rückzugweges" können frei vorgewählt werden;
—in vielen Fällen reicht die Bewegung längs der ersten Bahn bereits aus, Kurzschlüsse zu vermeiden, so daß keine längeren Arbeitsunterbrechungen auftreten;
—die Bewegung der Elektrode längs der zweiten Bahn beseitigt schnellst möglich Kurzschlüsse, da sich die Elektrode sehr schnell von der Kurzschlußfläche entfernt;
—mögliche Kollisionen zwischen Elektrode und Werkstück während der Rückzugsbewegung können durch die frei vorwählbaren Parameter der Rückzugsbewegung vermieden werden.

Je nach Kontur der zu erodierenden Ausnehmung bzw. Öffnung des Werkstückes können einzelne Parameter des Rückzugweges auch während des Erodiervorganges verändert werden, so daß Kollisionen zwischen Elektrode und Werkstück in jedem Falle ausgeschlossen sind.

Im folgenden wird die Erfindung anhand von Ausführungs- beispielen im Zusammenhang mit der Zeichnung ausführlicher erläutert.

Es zeigt:

Fig. 1 eine perspektivische Darstellung des Rückzugweges der Senkelektrode beim Verfahren nach der Erfindung;

Fig. 2 eine Draufsicht auf die Arbeitsebene (XY-Ebene) zur Erläuterung einer Komponente der Rückzugweges beim Verfahren nach der Erfindung;

Fig. 3 eine schematische, geschnittene Seitenansicht einer Senkelectrode beim Erodieren eines Werkstückes;

Fig. 4 eine geschnittene Draufsicht einer Senkelektrode une eines Werkstückes beim Senkerodieren einer zylindrischen Öffnung mit Darstellung des Rückzugsweges;

Fig. 5 eine geschnittene Seitenansicht einer Senkelektrode und eines Werkstückes zur Darstellung des Rückzugsweges bei geringer Tiefe der erodierten Öffnung;

Fig. 6 eine perspektivische Darstellung des Rückzugsweges beim Erodieren einer kugelförmigen Ausnehmung;

Fig. 7 eine schematische, perspektivische Darstellung des Rückzugsvektors und der Rückzugsebene; und

Fig. 8 eine Darstellung ähnlich Fig. 7 jedoch aus einem anderen Blickwinkel.

In allen Zeichnungen ist zur Verdeutlichung die Lage eines karthesischen Bezugs-Koordinatensystems (X, Y, Z) eingezeichnet, das die Lage der Hauptachsen der Maschine bezeichnet.

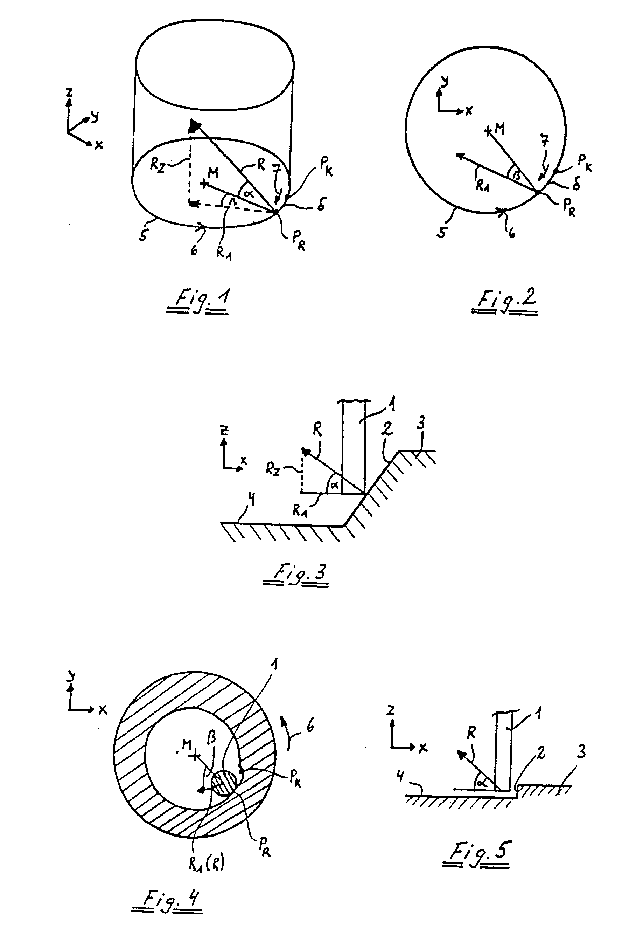

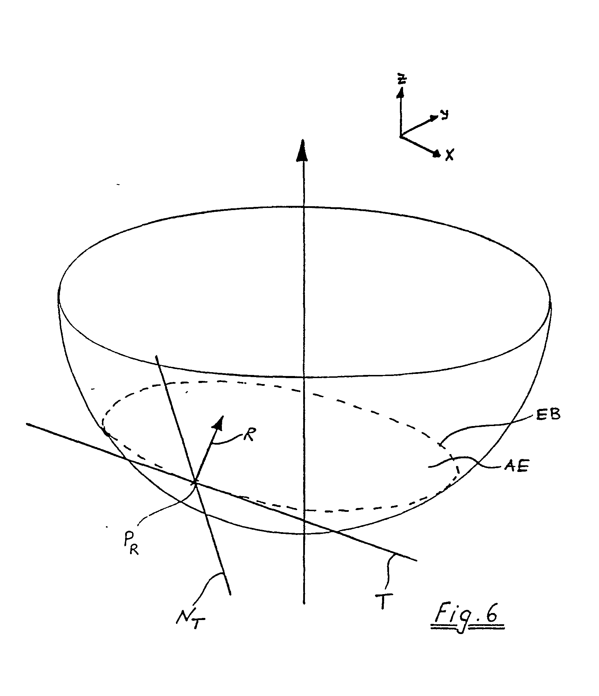

In Figs. 3, 4 und 5 ist eine Senkelektrode 1 als zylindrischer Körper dargestellt, der bereits eine konische Öffnung 2 in ein Werkstück 3 erodiert hat. Während des Erodierens wird die Senkelektrode 1 überlicherweise um ihre Längsachse gedreht. In den Fig. 1, 2, 4 und 5 ist die Öffnung im wesentlichen zylindrisch, während sie in Fig. 3 konisch ist. Der Boden 4 der konischen Öffnung 2 sei als eben angenommen, wobei dessen Ebene als Arbeitsebene AE bezeichnet wird, die in diesen Figuren mit der XY-Ebene zusammenfällt. Die relative Bewegung zwischen Senkelektrode 1 und Werkstück 3 wird über bekannte, steuerbare Bewegungseinrichtungen bewerkstelligt, z.B. eine Bewegung des Werkstückes durch sog. XY-Schlitten und die Bewegung der Elektrode durch sog. UV-Schlitten. Während des normalen Erodierens wird die Relativbewegung in bekannter Weise entlang vorprogrammierter Bahnen durchgeführt.

Unter Bezugnahme auf die Fig. 1 und 2 sei nun angenommen, daß die Senkelektrode 1 längs einer Kreisbahn 5 in Richtung des Pfeiles 6 bewegt wurde und daß am geometrischen Ort $P_K$ (im folgenden "Kurzschlußpunkt" genannt) ein Kurzschluß aufgetreten ist. Dies wird durch eine bekannte Mess- bzw. Überwachungseinrichtung festgestellt.

Nach einem Merkmal der Erfindung wird daraufhin die Ekeltrode längs der zuletzt beim Erodieren durchlaufenen Bahn in Richtung des Pfeiles 7 um eine Strecke $\delta$ (erste bahn) zurückbewegt, bis zum geometrischen Ort $P_R$ (im folgenden "Zwischenpunkt" oder "Rückzugspunkt" genannt). Die Länge dieser Strecke $\delta$ ist dabei vorporgrammiert. Am Zwischenpunkt $P_R$ wird nun geprüft, ob der Kurzschluß beseitigt ist. Ist dies der Fall, so erfolgt ein erneuter Erodiervorschub längs der Bahn 5 in Richtung des Pfeiles 6.

Liegt dagegen am Zwischenpunkt $P_R$ immer noch ein Kurzschluß vor, so wird die Senkelektrode 1 längs einer zweiten vorgegebenen Bahn R (im folgenden "Rückzugsvektor" genannt) bewegt. Dieser Rückzugsvektor R läuft geradlinig schräg nach oben. Damit hat der Rückzugsvektor R gegenüber der Arbeits- bzw. XY-Ebene einen ersten Winkel $\alpha$, der zwischen dem Rückzugsvek-

tor R und der Verbindungslinie zwischen dem Zwischenpunkt $P_K$ und dem Mittelpunkt M liegt. Bei einer Öffnung mit kreisförmigem Querschnitt ist der Verbindungslinie $P_{R-M}$ der Normalenvektor im Zwischenpunkt. Der Mittelpunkt M liegt dabei in der XY-Ebene und ist bei kreisförmiger Draufsicht der erodierten Öffnung 2 deren Kreismittelpunkt. Weicht die Form der erodierten Öffnung 2 von der Kreisform ab, so wird für die Definition der beiden Winkel α und β die Flächennormale im Kurzschlußpunkt $P_K$ oder vorzugsweise im Zwischenpunkt $P_R$ genommen. Ist die erste Bahn mit der Länge δ sehr kurz, so liegen diese beiden Punkte ohnehin sehr nahe beieinander, so daß man die Flächennormale im Kurzschlußpunkt ohne großen Fehler als Bezugsgröße nimmt. Ist dagegen die Weglänge δ größer, so wird man als Bezugsvektor die Flächennormale im Zwischenpunkt $P_R$ nehmen. Dies wird im Zusammenhang mit Fig. 4 noch detaillierter erläutert.

Die "Parameter" der Rückszugsbewegung sind damit:

— Weglänge δ längs der ersten Bahn;
— Winkel α und β;
— Länge der zweiten Bahn, d.h. Absolutbetrag $|R|$ des "Rückzugsvektors" R.

Alle diese Parameter können frei vorgewählt werden. Sie können auch während des Erosionsvorganges verändert werden, wenn die Konfiguration der erodierten Öffnung dies fordert, um Berührungen zwischen der Senkelektrode 1 und dem Werkstück 3 während des Rückzuges zu vermeiden. Die Parameter können dabei auch so gewählt werden, daß sich die Elektrode senkrecht zur Oberfläche des Werkstückes am Rückzugspunkt $P_R$ bewegt. Damit kann z.B. in Grenzfällen der Parameter β auch zu Null werden. Auch wird bei Festlegung des Rückzugsweges der zweiten Bahn zu berücksichtigen sein, daß die Elektrode anderen Oberflächenpunkten des Werkstückes nicht so nahe kommt, daß dort eine Kollision bzw. ein Kurzschluß starttfindet.

Die in die Figuren dargestellten "Rückzugsbahnen" sind zur Verdeutlichung recht groß dargestellt. In der Praxis können die Weglängen natürlich auch deutlich kleiner sein.

Die Fig. 1 bis 3 zeigen eine etwas idealisierte Darstellung. Eine realistischere Darstellung ist in den Fig. 4 und 5 angegeben. Beim Senkerodieren mit einer Elektrode hat diese ja einen nicht zu vernachlässigenden Durchmesser. Sie schneidet daher mit einem Teil ihres Durchmessers in das "Fleisch" des Werkstückes ein. Der Arbeitsspalt erstreckt sich damit in der Draufsicht der Fig. 4 um einen bestimmten Betrag um den Aussenumfang der Elektrode herum. Es ist damit auch richtiger, von einer Kurzschlußfläche zu sprechen als von einem Kurzschlußpunkt. Lokalisiert man jetzt den gedachten Kurzschlußpunkt in der Mitte der Elektrode, so weist die Flächennormale in diesem Kurzschlußpunkt $P_K$ selbst bei einer erodierten Öffnung mit kreisförmiger Kontur nicht zum Mittelpunkt M hin sondern in eine Richtung, die eine Komponente entgegengesetzt zur Hauptvorschubbewegung beim Erodieren (Pfeil 6) hat.

Hieraus wird die Funktion des Winkels β deutlich. Je nachdem, ob man den Winkel β auf die Flächennormale im Kurzschlußpunkt $P_K$ oder im Zwischenpunkt $P_R$ (wie es in Fig. 4 gezeigt ist) bezieht, ändert sich natürlich auch der Betrag des Winkels. Der Winkel β (von extremen Ausnahmefällen abgesehen) wird stets ein spitzer Winkel sien, wobei sein Vorzeichen so festgelegt ist, daß die in der XY-Ebene liegende Vektorkomponente $R_1$ des Rückzugsvektors R der Vorschubrichtung (Pfeil 6) entgegengesetzt ist. Dies ergibt sich bereits aus der Bezeichnung "Rückzugsvektor".

Fig. 5 liefert noch eine Begründung für den Winkel α. Das untere Ende der Elektrode 1 soll hier im wesentlichen aus dem Boden 4 der zu erodierenden Öffnung Material abtragen. Dabei muß natürlich auch hier die Elektrode in das "Fleisch" des Werkstückes 3 einschneiden, so daß sich eine Stufe ergibt, die Übertrieben groß in Fig. 5 dargestellt ist. Ob nun der eigentliche Kurzschlußpunkt zwischen der Stirnseite der Elektrode 1 und dem Boden 4 oder dem seitlichen Außenumfang der Elektrode 1 und der Stufe (Öffnung 2) auftritt, kann nicht festgestellt werden. Im ersten Fall müßte man idealerweise die Elektrode senkrecht nach oben in Z-Richtung heraussiehen, während man im zweiten Fall die Elektrode entgegengesetzt zur X-Achse und damit horizontal von der Stufe entfernen müßte. Daher bewegt man die elektrode unter dem Winkel α schräg nach oben aus der Öffnung heraus, so daß sich die Elektrode gleichzeitig vom Boden 4 und von der Stufe 2 entfernt. Im Ausführungsbeispiel der Fig. 5 liegt der Winkel α ca. bei 45°. Je nach Form der Elektrode, der zu erodierenden Öffnung sowie auch zusätzlich nach Erfahrungswerten kann der Winkel α natürlich auch andere Werte annehmen. Hierzu kann man statistisch ermitteln, bei welcher Größe des Winkel α der Kurzschluß am schnellsten beseitigt wird. Gleiches gild natürlich auch für den Winkel β. Im Ergebnis wird man versuchen, die Länge des Rückzugvektors R so gering wie möglich zu halten und damit auch den Zeitverlust für das Weg- und Wiederhinfahren der Elektrode, was ja eine Arbeitsunterbrechung des Erodiervorganges darstellt.

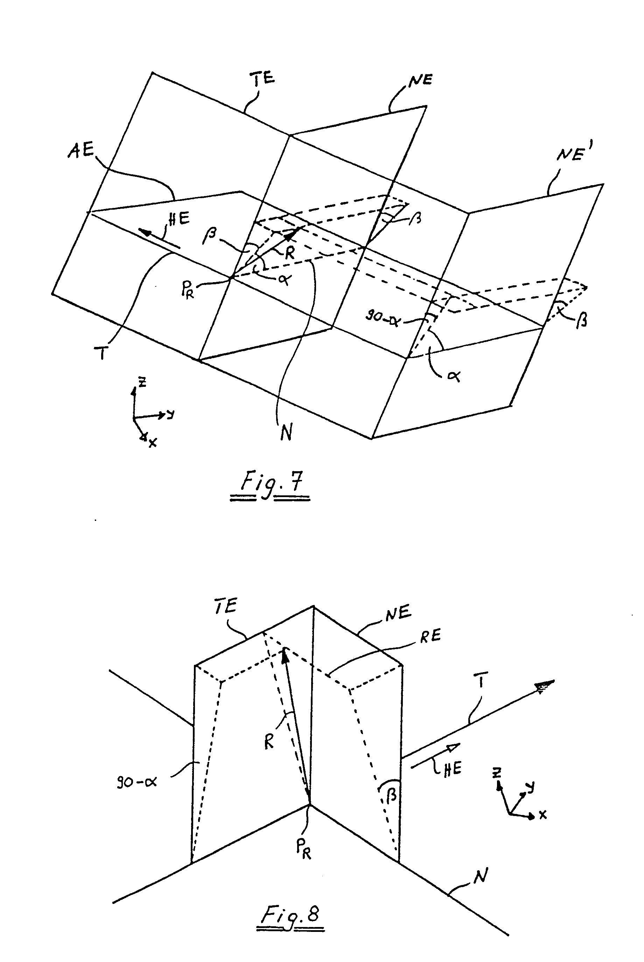

Die Fig. 6 bis 8 zeigen einen allgemeineneren Fall, bei dem die Arbeitsebene AE nicht mit den Hauptachsen der Maschine (XY-Ebene) übereinstimmt. In Fig. 6 wird schematisch das Erodieren einer kugeelförmigen Aushehmung dargestellt, wo die Erosionsbahn EB, welche die Arbeitsebene AE aufspannt, gegenüber der XY-Ebene gekippt ist. Zur Bestimmung des Rückzugvektors R im Rückzugspunkt $P_R$, wird an den Rückspunkt eine Tangente T angelegt, die gleichzeitig Tangente an die Erosionsbahn EB in diesem Punkt $P_R$ ist. Weiterhin wird senkrecht zur Tangente T eine weitere Tangente $N_T$ den Rückzugspunkt angelegt, wobei die weitere Tangente $N_T$ senkrecht zur Tangente T steht. Diese beiden Tangenten T und $N_T$ spannen damit eine TAngentialebene TE im Rückzugspunkt $P_R$ auf, die in den Fig. 7 und 8 dargestellt ist.

Senkrecht zu der Tangentialebene $T_E$ liegt nun eine eindeutig definierte Ebene, welche die Tangente T enthält und senkrecht zur Tangente $N_T$ steht. Diese Ebene ist die Arbeitsebene AE. Eine dritte Ebene, die senkrecht zur Tangentialebene TE und senkrecht zur Arbeitsebene AE steht und damit die Tangente $N_T$ enthält, wird als Normalebene NE bezeichnet. Diese drei Ebenen AE, TE und NE bilden ein von den Hauptachsen der Maschine unabhängiges, benutzerorientiertes Koordinatensystem. Der Rückzugsvektor R läßt sich für den Benutzer besonders anschaulich durch seine Länge und zwei Winkel ($\alpha$ und $\beta$) definieren.

Wie aus den Fig. 7 und 8 zu erkennen ist, ist der Rückzugsvektor gegenüber der Tangentialebene TE un den Winkel $90-\alpha$ gekippt. Dieser Winkel bezeichnet also die Neigung des Rückzugsvektors von der Wandung der erodierten Öffnung im Rückzugspunkt $P_R$ weg. Weiterhin ist der Rückzugsvektor R gegenüber der Normalebenen NE um den Winkel $\beta$ gekippt, wobei dieser Winkel die Neigung des Rückzugsvektors gegenüber der Haupterosionsrichtung HR veranschaulicht. Der Winkel $\beta$ ist dabei so gewählt, daß die Rückzugsbewegung eine Komponente gegengesetzt zur Haupterosionsrichtung (HE) hat.

Mit diesen Definitionen läßt sich dann eine Rückzugsebene RE (Fig. 8) definieren, die gegenüber der Normalebene NE um den Winkel $\beta$ gekippt ist. Der Rückzugsvektor liegt dann in dieser Rückzugsebene RE und hat gegenüber der Tantentialebene TE den Winkel $90-\alpha$. (Der letztgenannte Winkel ($90-\alpha$) wurde in Übereinstimmung mit den Ausführungsbeispielen der Fig. 1 bis 5 festgelegt. In den Fig. 1, 3 und 5 wird der Winkel nämlich von der Arbeitsebene aus gemessen). Zur etwas deutlicheren Darstellung ist in Fig. 7 noch eine parallel zur Normalebene NE liegende Ebene NE' abgebildet, aus der die Winkel $\alpha$, $90-\alpha$ und $\beta$ deutlicher zu erkennen sind.

**Patentansprüche**

1. Verfahren zur gesteuerten Rückzugsbewegung einer Senkelektrode bei einer Elektroerosionsmaschine, bei dem im Falle eines Kurzschlusses zwischen Senkelektrode und Werkstück die Senkelektrode auf einer vergegebenen, geradlinigen Rückzugsbahn zurückgezogen wird, gekennzeichnet durch folgende Merkmale:

a) die Senkelektrode wird bei Auftreten eines Kurzschlusses zunächst eine vorgegebene Weglänge ($\delta$) längs der zuvor durchlaufenen Bahn ($P_K$—$P_R$) von dem Kurzschlußpunkt ($P_K$) zu einem Zwischenpunkt ($P_R$) zurückgewegt.

b) im Zwischenpunkt ($P_R$) wird geprüft, ob weiterhin ein Kurzschluß vorhanden ist,

c) bie dann noch vorhandenem Kurzschluß wird die Senkelektrode auf einer vorgegebenen zweiten Bahn (R) von dem Zwischenpunkt ($P_R$) fortbewegt,

d) die Rückzugsbahn wird automatisch berechnet,

e) die Rückzugsbahn (R) wird während des Erodiervor ganges automatisch verändert,

f) während des Erodiervorganges wird automatisch die Neigung der Tangentialebene (TE) in dem Zwischenpunkt ($P_R$) berechnet und

g) die Richtung der Tangentialebene wird für die automatische Berechnung der Rückzugsbahn (R) benutzt.

2. Verfahren nach Anspruch 1, dadurch gekennzeichnet, daß die Senkelektrode von dem Zwischenpunkt ($P_R$) längs der vorgegebenen Rückzugsbahn (R) schräg nach oben aus der erodierten Öffnung des Werkstückes herausbewegt wird, derart, daß die Rückzugsbahn (R) in einer Rückzugsebene (RE), liegt, wobei die Rückzugsebene (RE)

a) senkrecht zu einer Tangentialebene (TE) im Zwischenpunkt ($P_R$) liegt und

b) gegenüber einer senkrecht zur Tangentialebene (TE) und senkrecht zu einer Tangente an die Erosionsbahn (EB) im Zwischenpunkt ($P_R$) liegenden Normalebene (NE) um einen Winkel ($\beta$) gekippt ist, wobei dieser Winkel ($\beta$) so gewählt ist, daß die Rückzugsbahn (R) entgegengesetzt zur Haupterosionsrichtung (HE) geneigt ist und wobei die Rückzugsbahn (R) gegenüber der Tagentialebene (TE) um einen weiteren Winkel ($90-\alpha$) gekippt ist, wobei der Winkel $\alpha$ $0°$ und $90°$ ist.

3. Verfahren nach Anspruch 1 oder 2, dadurch gekennzeichnet, daß die Länge (R) der Rückzugsbahn (R) einstellbar ist.

4. Verfahren nach einem der Ansprüche 1 bis 3, dadurch gekennzeichnet, daß die Parameter der vorgegebenen Weglänge ($\delta$) und der Rückzugsbahn ($\alpha$, $\beta$, R) während des Erodiervorganges veränderbar sind.

5. Verfahren nach einem der Ansprüche 1 bis 4, dadurch gekennzeichnet, daß laufend während des Erodiervorganges die Koorinaten (X, Y, Z) der vorgegebenen Weglänge und der Rückzugsbahn (R) ermittelt werden.

6. Verfahren nach einem der Ansprüche 1 bis 4, dadurch gekennzeichnet, daß die Koorinaten (X, Y, Z) der vorgegebenen Weglänge unter der Rückzugsbahn erst nach Auftreten eines Kurzschlusses ermittelt werden.

7. Verfahren nach einem der Ansprüche 2 bis 4, dadurch gekennzeichnet, daß laufend während des Erodiervorganges die Lage der Rückzugsebene (RE) und damit die beiden Winkel ($\alpha$ und $\beta$) ermittelt werden.

8. Verfahren nach einem der Ansprüche 2 bis 4, dadurch gekennzeichnet, daß die Lage der Rückzugsebene (RE) und die beiden Winkel ($\alpha$ und $\beta$) erst nach Auftreten eines Kurzschlusses ermittelt werden.

**Revendications**

1. Procédé pour la commande rétrograde du déplacement d'une électrode à mouvement descendant, dans une machine d'usinage par électroérosion dans laquelle se produit un court-circuit entre l'électrode descendante et la pièce, l'e"lectrode descendante étant reculée sur une trajectoire rectiligne, vers l'arrière et fixée d'avance, caractérisé par les points particuliers qui suivent:

a) l'électrode à mouvement descendant est d'abord reculée, lors de l'apparition d'un court-circuit, suivant un trajet de longeuer préétablie ($\delta$) le long de la trajectoire précédemment parcourue ($P_X$—$P_R$) du point de court-circuit ($P_K$) à un point intermédiaire ($P_R$);

b) on teste au point intermédiaire ($P_R$) si le court-circuit existe toujours;

c) se li court-circuit se manifeste encore à ce moment, l'électrode à mouvement descendant est déplacée plus loin du point intermédiaire ($P_R$) sur une deuxième trajectoire (R) préétablie;

d) la trajectoire rétrograde est calculée automatiquement;

e) la trajectoire rétrograde (R) est modifiée automatiquement pendant le processus d'érosion;

f) pendant le processus d'érosion, l'inclinaision du plan tangentiel (TE) au point intermédiaire ($P_R$) est calculée automatiquement;

g) la direction du plan tangentiel est utilisée pour le calcul automatique de la trajectoire de rétrogradation (R).

2. Procédé selon la revendication 1, caractérisé en ce que l'électrode à mouvement descendant est déplacée obliquement vers le haut hors de l'ouverture érodée de la pièce, à partir du point intermédiaire (PR), le long d'une trajectoire rétrograde préétablie (R), de telle sorte que cette trajectoire (R) se trouve dans un plan de rétrogradation (RE), procédé dans lequel le plan de rétrogradation (RE):

a) est placé au point intermédiaire ($P_R$) perpendiculairement à un plan tangentiel (TE);

b) est basculé d'un angle ($\beta$) par rapport à un plan normal (NE) perpenduculaire au plan tangentiel (TE) et aussi perpenduculaire à une tangente à la trajectoire (EB) d'érosion au point intermédiaire (PR), ce qui, détermine l'angle ($\beta$) de telle sorte qui la trajectoire rétrograde (R) soit inclinée en sens contraire de la direction d'érosion principale (HE) et ce grâce à quoi, la trajectoire rétrograde (R) est basculée par rapport au plan tangentiel (TE) d'un autre angle (90-$\alpha$), l'angle $\alpha$ étant compris entre 0 et 90°.

3. Procédé selon la revendication 1 ou 2, caractérisé en ce que la longueur (R) de la trajectoire rétrograde (R) est réglable.

4. Procédé selon l'une des revendications 1 à 3, caractérisé en ce que les paramètres du trajet de longueur ($\delta$) pré-établie et de trajectoire rétrograde (R, $\alpha$, $\beta$) sont modifiables pendant le processus d'érosion.

5. Procédé selon l'une des revendications 1 à 4, caractérisé en ce que les coordonées (X, Y, Z) du trajet de longueur pré-établie et de la trajectoire rétrograde (R) sont calculées en permanence pendant le processus d'érosion.

6. Procédé selon l'une des revendications 1 à 4, caractérisé en ce que les coordonnées (X, Y, Z) du trajet de longueur pré-établie sous la trajectoire rétrograde ne sont calculées qu'après l'apparition d'un court-circuit.

7. Procédé selon l'une des revendications 2 à 4, caractérisé en ce que la position du plan de rétrogradation (RE) et, par suite, les deux angles ($\alpha$ et $\beta$) sont calculés de manière continue pendant le processus d'érosion.

8. Procédé selon l'une des revendications 2 à 4, caractérisé en ce que la position du plan rétrograde (RE) et en ce que les deux angles ($\alpha$ et $\beta$) ne sont déterminés qu'après l'apparition d'un court-circuit.

**Claims**

1. A method for the controlled return action of a lowering electrode in an electroerosion machine, wherein in the event of a short-circuit between the lowering electrode and the workpiece, the lowering electrode is returned along a predetermined linear return path, characterised by the following features:

a) in the event of a short-circuit, the lowering electrode is firstly returned a predetermined distance ($\delta$) along the previously covered path ($P_K$—$P_R$) away from the short-circuit point ($P_K$) to an intermediate point ($P_R$),

b) a test is carried out at the intermediate point ($P_R$) to determine whether a short-circuit still exists,

c) in the event that a short-circuit still exists, the lowering electrode is moved forward along a given second path (R) sway from the intermediate point ($P_R$),

d) the return path is automatically calculated,

e) the return path (R) is automatically altered during the erosion process,

f) during the erosion process, the angle of inclination of the tengential plane (TE) is calculated at the intermediate point ($P_R$) and

g) the direction of the tangential plane is used for the automatic calculation of the return path (R).

2. A method according to claim 1, characterised in that the lowering electrode is moved upwards at an angle from the intermediate point ($P_R$) along the given return path (R) and out of the eroded opening of the workpiece in such a manner that the return path (R) lies in a return plane (RE), the return plane (RE)

a) lying perpendicular to a tangential plane (TE) in the intermediate point ($P_R$) and

b) being inclined through an angle ($\beta$) relative to a normal plane (NE), which is perpendicular to a tangential plane (TE) and perpendicular to a tangent of the erosion path (EB) at the intermediate point ($P_R$), the said angle ($\beta$) being selected in such a manner that the return path (R) is inclined in the opposite direction to the main erosion direction (HE), the return path (R) being inclined relative to the tangential plane (TE) through a further angle (90-$\alpha$), the angle ($\alpha$) being 0° and 90°.

3. A method according to claim 1 or 2, characterised in that the length (R) of the return path (R) is adjustable.

4. A method according to one of claims 1 to 3, characterised in that the parameters of the given distance ($\delta$) and of the return path ($\alpha$, $\beta$, R) can be varied during the erosion process.

5. A method according to one of claims 1 to 4, characterised in that the coordinates (X, Y, Z) of the given distance and return path (R) are continuously determined during the erosion process.

6. A method according to one of claims 1 to 4, characterised in that the coordinates (X, Y, Z) of the given distance and return path (R) are only determined after the occurrence of a short-circuit.

7. A method according to one of claims 2 to 4, characterised in that the position of the return plane (RE) and therefore the two angles (α and β) are continuously determined during the erosion process.

8. A method according to one of claims 2 to 4, characterised in that the position of the return plane (RE) and the two angles (α and β) are only determined after the occurrence of a short-circuit.

EP 0 209 792 B1

Fig. 1

Fig. 2

Fig. 3

Fig. 4

Fig. 5

1

Fig.6

_Fig.7_

_Fig.8_